# EUROPÄISCHE PATENTANMELDUNG

(11) **EP 4 844 886 A1**
(43) Veröffentlichungstag der Anmeldung: **25.11.2026**
(21) Anmeldenummer: 26177885.6
(22) Anmeldetag: 11.05.2026
(51) Int. Cl.: H01M 10/42, H01M 10/48, H01M 50/204, H01M 50/251

(54) **ENERGIESPEICHER UND EIN VERFAHREN ZUM STEUERN DES ENERGIESPEICHERS**

(30) Priorität: 23.05.2025 DE 102025120235
(71) Anmelder: Wöhrle Stromversorgungssysteme GmbH, 71144 Steinenbronn (DE)
(72) Erfinder: Robel, Wolfgang, 70794 Stuttgart (DE); Schlittenhardt, David, 71159 Mötzingen (DE); Steiner, Markus, 85465 Langenpreising (DE)
(74) Vertreter: BRP Renaud & Partner mbB Rechtsanwälte Patentanwälte Steuerberater

(57) **Zusammenfassung**

Die Erfindung betrifft einen Energiespeicher (1) insbesondere für eine unterbrechungsfreie Stromversorgung. Der Energiespeicher (1) umfasst ein Trägergehäuse (3) und wenigstens ein in dem Trägergehäuse (3) entnehmbar angeordnetes Speichermodul (2). Das Speichermodul (2) umfasst eine Batterieeinheit (5) und eine Einzelsteuerung (7). Der Energiespeicher (1) umfasst eine Gesamtbatterie (20) und die Batterieeinheit (5) des Speichermodus (2) bildet zumindest anteilig die Gesamtbatterie (20) aus. Ferner umfasst der Energiespeicher (1) eine dezentrale Steuerungseinheit (7) und die Einzelsteuerung (7) des Speichermoduls (2) bildet zumindest anteilig die dezentrale Steuerungseinheit (11) aus. Die Erfindung betrifft auch ein Verfahren (25) zum Steuern des Energiespeichers (1).

## Beschreibung

Die Erfindung betrifft einen Energiespeicher, insbesondere für eine unterbrechungsfreie Stromversorgung, nach dem Oberbegriff des Anspruchs 1. Die Erfindung betrifft auch ein Verfahren zum Steuern des Energiespeichers.

Ein Energiespeicher kann insbesondere für eine unterbrechungsfreie Stromversorgung verwendet werden. Der Energiespeicher kann dabei ein Trägergehäuse und mehrere in dem Trägergehäuse entnehmbar bzw. auswechselbar angeordnete Speichermodule aufweisen. Jedes Speichermodul umfasst dabei eine Batterieeinheit, die eine Gesamtbatterie des Energiespeichers ausbildet. Der Energiespeicher kann zudem ein Steuerungsmodul, das die Speichermodule beim Zuschalten auf deren Funktion prüft und im Betrieb steuert, umfassen. Das Steuerungsmodul ist öfters als ein separates Modul in dem Trägergehäuse verbaut und ist mit jedem Speichermodul separat verschaltet. Nachteiligerweise weist ein derartiges Steuerungsmodul einen hohen Platzbedarf auf. Ferner führt ein Ausfall des Steuerungsmoduls zum vollständigen Ausfall des Energiespeichers.

Die Aufgabe der Erfindung ist es daher, für einen Energiespeicher der gattungsgemäßen Art eine verbesserte oder zumindest alternative Ausführungsform anzugeben, bei der die beschriebenen Nachteile überwunden werden. Die Aufgabe der Erfindung ist es auch, ein Verfahren zum Steuern bzw. Betreiben des Energiespeichers bereitzustellen.

Diese Aufgabe wird erfindungsgemäß durch den Gegenstand der unabhängigen Ansprüche gelöst. Vorteilhafte Ausführungsformen sind Gegenstand der abhängigen Ansprüche.

Der erfindungsgemäße Energiespeicher ist insbesondere für eine unterbrechungsfreie Stromversorgung vorgesehen bzw. ausgelegt. Der Energiespeicher weist dabei wenigstens ein Speichermodul und ein Trägergehäuse zum Anordnen bzw. Aufnehmen mehrerer solcher Speichermodule auf. Das wenigstens eine Speichermodul ist dabei in dem Trägergehäuse entnehmbar bzw. auswechselbar angeordnet bzw. aufgenommen. Dabei umfasst das wenigstens eine Speichermodul eine Batterieeinheit mit mehreren Batteriezellen zum Bereitstellen einer Gleichspannung und eine Einzelsteuerung zum Steuern des wenigstens einen Speichermoduls. Der Energiespeicher umfasst ferner eine aus einer oder mehreren Batterieeinheiten zusammensetzbare Gesamtbatterie auf, wobei die Batterieeinheit des wenigstens einen Speichermodus zumindest anteilig die Gesamtbatterie des Energiespeichers ausbildet. Der Energiespeicher umfasst zudem eine, insbesondere ausschließlich, aus einer oder mehreren Einzelsteuerungen zusammensetzbare dezentrale Steuerungseinheit, wobei die Einzelsteuerung des wenigstens einen Speichermoduls zumindest anteilig die dezentrale Steuerungseinheit des Energiespeichers ausbildet.

In dem erfindungsgemäßen Energiespeicher ist demnach kein zentrales Steuerungsmodul vorgesehen oder notwendig. Die zum Steuern der Speichermodule notwendigen und/oder vorgesehen Funktionen des Energiespeichers können mittels der dezentralen Steuerungseinheit dezentral über die Einzelsteuerungen der einzelnen Speichermodule realisiert werden. Dadurch kann einerseits der Energiespeicher kompakter ausgebildet sein und andererseits der Energiespeicher vereinfacht gesteuert werden. Ferner kann die Sicherheit des Energiespeichers erhöht werden, da beim Ausfallen der Einzelsteuerung eines der Speichermodule die weiteren Speichermodule weiterhin über die dezentrale Steuerungseinheit steuerbar sind. Im Vergleich dazu fällt in dem herkömmlichen Energiespeicher beim Ausfallen des Steuerungsmoduls der gesamte Energiespeicher aus.

Bei einer möglichen Ausführungsform des Energiespeichers kann das wenigstens eine Speichermodul einen Leistungsschaltkreis und der Energiespeicher einen Gesamtschaltkreis aufweisen. Dabei kann in dem Leistungsschaltkreis des wenigstens einen Speichermoduls die Batterieeinheit des wenigstens einen Speichermoduls und in dem Gesamtschaltkreis des Energiespeichers die Gesamtbatterie angeschlossen sein. Der Leistungsschaltkreis des wenigstens einen Speichermoduls kann derart ausgebildet sein, dass bei dem in dem Trägergehäuse angeordneten Speichermodul sein Leistungsschaltkreis zumindest anteilig den Gesamtschaltkreis des Energiespeichers ausbildet. Zudem kann der Leistungsschaltkreis des wenigstens einen Speichermoduls derart ausgebildet sein, dass bei dem geschlossenen Leistungsschaltkreis die Batterieeinheit des wenigstens einen Speichermoduls zumindest anteilig die Gesamtbatterie des Energiespeichers ausbildet. Der Leistungsschaltkreis kann vollständig innerhalb des wenigstens einen Speichermoduls ausgebildet bzw. angeordnet sein. Der Gesamtschaltkreis kann neben dem Leistungsschaltkreis des wenigstens einen Speichermoduls auch Verbindungselemente wie beispielweise Leitungen aufweisen. Die Verbindungselemente des Gesamtschaltkreises können in dem Trägergehäuse des Energiespeichers angeordnet sein. Beim Anordnen des Speichermoduls in dem Trägergehäuse kann dann sein Leistungsschaltkreis mit den Verbindungselementen des Gesamtschaltkreises und über die Verbindungselemente des Gesamtschaltkreises mit Leistungsschaltkreisen anderer bereits in dem Trägergehäuse angeordneten Speichermodulen verschaltet bzw. elektrisch verbunden sein. Der Gesamtschaltkreis kann derart ausgebildet sein, dass die Gesamtbatterie nach außen mit einer externen zu versorgenden Einheit kontaktierbar ist.

Bei einer möglichen Ausführungsform des Energiespeichers kann das wenigstens eine Speichermodul einen Versorgungsschaltkreis und das Trägergehäuse wenigstens ein Leitungsstück aufweisen. In dem Versorgungsschaltkreis des wenigstens einen Speichermoduls können dabei die Batterieeinheit des wenigstens einen Speichermoduls und die Einzelsteuerung des wenigstens einen Speichermoduls angeschlossen sein. Der Versorgungsschaltkreis des wenigstens einen Speichermoduls kann derart ausgebildet sein, dass bei dem in dem Trägergehäuse angeordneten Speichermodul sein Versorgungsschaltkreis über das Leitungsstück des Trägergehäuses geschlossen ist. Zudem kann der Versorgungsschaltkreis des wenigstens einen Speichermoduls derart ausgebildet sein, dass bei dem geschlossenen Versorgungsschaltkreis die Einzelsteuerung des wenigstens einen Speichermoduls von der Batterieeinheit des wenigstens einen Speichermoduls bestrombar ist. Ist also das wenigstens eine Speichermodul nicht in dem Trägergehäuse angeordnet, so sind sein Versorgungsschaltkreis geöffnet und die Einzelsteuerung nicht bestrombar. Dadurch kann insbesondere sichergestellt werden, dass das wenigstens eine Speichermodul außerhalb des Trägergehäuses ausgeschaltet ist und dadurch die Energie der Batterieeinheit des wenigstens einen Speichermoduls gespart werden.

Bei dem wenigstens einen Speichermodul kann der Leistungsschaltkreis eine einem Minuspol der Batterieeinheit zugeordnete Minuspol-Leitung mit einem Minuspol-Schalter und eine einem Pluspol der Batterieeinheit zugeordnete Pluspol-Leitung mit einem Pluspol-Schalter aufweisen. Der Minuspol-Schalter und der Pluspol-Schalter können dabei derart ausgebildet sein, dass sie bei dem geöffneten Versorgungsschaltkreis geöffnet sind und bei dem geschlossenen Versorgungsschaltkreis mittels der Einzelsteuerung des wenigstens einen Speichermoduls schließbar und öffenbar sind. Ist also das wenigstens eine Speichermodul nicht in dem Trägergehäuse angeordnet, so sind der Minus-Schalter und der Plus-Schalter geöffnet und kein Strom kann über den Leistungsschaltkreis nach außen abfließen. Dadurch kann insbesondere die Sicherheit des wenigstens einen Speichermoduls bei seiner Handhabung - also bei der Anordnung in dem Trägergehäuse oder beim Transport - für den Nutzer erhöht werden.

Der Leistungsschaltkreis und der Versorgungsschaltkreis können derart ausgebildet sein, dass beim Anordnen des wenigstens einen Speichermoduls in dem Trägergehäuse der Versorgungsschaltkreis des wenigstens einen Speichermoduls über das Leitungsstück geschlossen ist, bevor sein Leistungsschaltkreis an den Gesamtschaltkreis des Energiespeichers angeschlossen ist. Zudem können der Leistungsschaltkreis und der Versorgungsschaltkreis derart ausgebildet sein, dass beim Entnehmen des wenigstens einen Speichermoduls aus dem Trägergehäuse sein Versorgungsschaltkreis über das Leitungsstück geöffnet ist, bevor sein Leistungsschaltkreis von dem Gesamtschaltkreis des Energiespeichers getrennt ist. Dadurch kann insbesondere sichergestellt werden, dass die Einzelsteuerung nicht bestromt ist und demnach der Pluspol-Schalter und der Minuspol-Schalter des Leistungsschaltkreises geöffnet sind, bevor der Leistungsschaltkreis bzw. seine Anschlüsse von außen erreichbar sind. Dadurch kann insbesondere die Sicherheit des wenigstens einen Speichermoduls für den Nutzer erhöht werden.

Bei einer möglichen Ausführungsform des Energiespeichers kann das Trägergehäuse wenigstens eine einem Minuspol der Gesamtbatterie zugeordnete Minuspol-Aufnahme und wenigstens eine einem Pluspol der Gesamtbatterie zugeordnete Pluspol-Aufnahme aufweisen. Das in der Pluspol-Aufnahme angeordnete wenigstens eine Speichermodul kann dann dem Pluspol der Gesamtbatterie und das in der Minuspol-Aufnahme angeordnete wenigstens eine Speichermodul kann dann dem Minuspol der Gesamtbatterie zugeordnet sein. Mit anderen Worten kann in dem Energiespeicher eine Zuweisung der Speichermodule zum Minuspol und zum Pluspol der Gesamtbatterie über deren Anordnung in dem Trägergehäuse erfolgen. Die Pluspol-Aufnahmen und die Minuspol-Aufnahmen können in dem Gesamtschaltkreis des Energiespeichers auch entsprechend miteinander verbunden bzw. verschaltet sein.

Das Trägergehäuse kann dabei für jede Pluspol-Aufnahme jeweils ein Widerstandselement mit einem ersten elektrischen Widerstand und für jede Minuspol-Aufnahme jeweils ein Widerstandselement mit einem zweiten elektrischen Widerstand aufweisen. Dabei kann der zweite Widerstand von dem ersten Widerstand abweichen. Das wenigstens eine Speichermodul kann zudem einen Erkennungsschaltkreis aufweisen. Der Erkennungsschaltkreis des wenigstens einen Speichermoduls kann derart ausgebildet sein, dass bei dem in dem Trägergehäuse angeordneten Speichermodul sein Erkennungsschaltkreis über das Widerstandselement des Trägergehäuses geschlossen ist. Bei dem geschlossenen Erkennungsschaltkreis kann dann die Zuordnung des wenigstens einen Speichermoduls dem Minuspol der Gesamtbatterie oder dem Pluspol der Gesamtbatterie anhand einer Widerstandsmessung des Widerstandelements von der Einzelsteuerung des wenigstens einen Speichermoduls erkennbar sein. Mit anderen Worten kann die Einzelsteuerung des wenigstens einen Speichermoduls über den Erkennungskreislauf den elektrischen Widerstand des Widerstandselements erfassen und anhand des erfassten Widerstand feststellen, ob das wenigstens eine Speichermodul sich in der Pluspol-Aufnahme befindet und dem Pluspol zugeordnet ist oder ob das wenigstens eine Speichermodul sich in der Minuspol-Aufnahme befindet und dem Minuspol der Gesamtbatterie zugeordnet ist.

Bei einer möglichen Ausführungsform des Energiespeichers kann der Energiespeicher wenigstens einen Verbinder mit einem in dem wenigstens einen Speichermodul angeordneten ersten Verbinder-Stück und einem in dem Trägergehäuse angeordneten zweiten Verbinder-Stück aufweisen. Das wenigstens eine Speichermodul kann dabei bei den miteinander verbundenen Verbinder-Stücken mit Komponenten des Trägergehäuses verschaltet und bei den miteinander nicht verbundenen Verbinder-Stücken mit Komponenten des Trägergehäuses nicht verschaltet sein. Über den Verbinder können insbesondere der Leistungsschaltkreis zu dem Gesamtschaltkreis zugeschaltet sein und/oder der Versorgungsschaltkreis über das Leitungsstück geschlossen sein und/oder der Erkennungskreislauf mit dem Widerstandselement verbunden sein. Der Verbinder kann insbesondere derart ausgebildet sein, dass das erste Verbinder-Stück und das zweite Verbinder-Stück beim Anordnen des wenigstens einen Speichermoduls in dem Trägergehäuse automatisch ineinander geführt und miteinander verbunden sind.

Die Erfindung betrifft auch ein Verfahren zum Betreiben des oben beschriebenen Energiespeichers. In dem Verfahren wird zuerst ein zuzuschaltendes Speichermodul des Energiespeichers in dem Trägergehäuse des Energiespeichers angeordnet. Dann wird die Einzelsteuerung des zuzuschaltenden Speichermoduls zu der dezentralen Steuerungseinheit des Energiespeichers zugeschaltet und bildet diese zumindest anteilig aus. Die Einzelsteuerung des zuzuschaltenden Speichermoduls führt dann eine Zuschaltprüfung der Batterieeinheit des zuzuschaltenden Speichermoduls durch. Bei der Zuschaltprüfung prüft die Einzelsteuerung des zuzuschaltenden Speichermoduls, ob eine Differenz zwischen einer Spannung der Batterieeinheit des zuzuschaltenden Speichermoduls und einer Gesamtspannung der Gesamtbatterie einen vordefinierten Grenzwert überschreitet. Dabei bewertet die Einzelsteuerung des zuzuschaltenden Speichermoduls die Zuschaltprüfung als bestanden, wenn die Differenz den vordefinierten Grenzwert nicht überschreitet, und sonst als nicht bestanden. Bei der nicht bestandenen Zuschaltprüfung schaltet die Einzelsteuerung des zuzuschaltenden Speichermoduls die Batterieeinheit des zuzuschaltenden Speichermoduls zu der Gesamtbatterie des Energiespeichers nicht zu. Dadurch werden in dem Verfahren nur die Batterieeinheiten der Speichermodule zu der Gesamtbatterie des Energiespeichers zugeschaltet, die die Zuschaltprüfung bestanden haben. Insbesondere kann in der Zuschaltprüfung anhand der Differenz festgestellt werden, ob die Batterieeinheit des zuzuschaltenden Speichermoduls ohne Gefahr eines hohen Ausgleichsstroms zu der Gesamtbatterie zugeschaltet werden kann. Dadurch kann die Funktion der Gesamtbatterie des Energiespeichers sichergestellt werden.

Nach der bestandenen Zuschaltprüfung kann die Einzelsteuerung des zuzuschaltenden Speichermoduls die Batterieeinheit des zuzuschaltenden Speichermoduls zu der Gesamtbatterie des Energiespeichers zuschalten. Alternativ kann die Einzelsteuerung des zuzuschaltenden Speichermoduls nach der bestandenen Zuschaltprüfung eine Symmetrieprüfung durchführen. Nach der bestandenen Symmetrieprüfung kann die Einzelsteuerung des zuzuschaltenden Speichermoduls die Batterieeinheit des zuzuschaltenden Speichermoduls zu der Gesamtbatterie des Energiespeichers zuschalten und sonst in einen Wartemodus setzen. In dem Wartemodus kann sich das zuzuschaltende Speichermodul solange befinden, bis ein Zuschalten der Batterieeinheit zu der Gesamtbatterie des Energiespeichers möglich wird bzw. bis die Symmetrieprüfung bestanden wird.

Dabei kann die Einzelsteuerung des zuzuschaltenden Speichermoduls nach der bestandenen Zuschaltprüfung die Symmetrieprüfung insbesondere durchführen, wenn ein Zuschaltschema des Energiespeichers eine Serienschaltung der Batterieeinheiten der Speichermodule in der Gesamtbatterie aufweist. Ob die Symmetrieprüfung nach der bestandenen Zuschaltprüfung durchgeführt wird, hängt also von dem Zuschaltschema des Energiespeichers ab. Ist in dem Energiespeicher ein Zuschaltschema ohne eine Serienschaltung/Reihenschaltung bzw. ein Zuschaltschema ausschließlich mit einer Parallelschaltung der Speichermodule bzw. der Batterieeinheiten der Speichermodule vorgesehen, so wird die Symmetrieprüfung nicht durchgeführt. Ist in dem Energiespeicher ein Zuschaltschema mit einer Serienschaltung/Reihenschaltung der Speichermodule bzw. der Batterieeinheiten der Speichermodule vorgesehen, so wird die Symmetrieprüfung durchgeführt. Bei dem Zuschaltschema mit der Serienschaltung/Reihenschaltung der Speichermodule kann durch die Symmetrieprüfung eine Asymmetrie zwischen den dem Pluspol zugeordneten Speichermodulen und den dem Minuspol der Gesamtbatterie zugeordneten Speichermodulen vermieden werden und dadurch die Funktion der Gesamtbatterie des Energiespeichers sichergestellt werden.

Bei der Symmetrieprüfung kann die Einzelsteuerung des zuzuschaltenden Speichermoduls insbesondere prüfen, ob das zuzuschaltende Speichermodul sich in einer einem Pluspol der Gesamtbatterie zugeordneten Pluspol-Aufnahme oder in einer einem Minuspol der Gesamtbatterie zugeordneten Minuspol-Aufnahme des Trägergehäuses befindet. Mit anderen Worten kann die Einzelsteuerung die Zuordnung des wenigstens einen Speichermoduls dem Pluspol der Gesamtbatterie oder dem Minuspol der Gesamtbatterie überprüfen. Die Überprüfung kann insbesondere mittels des oben beschriebenen Erkennungsschaltkreises des zuzuschaltenden Speichermoduls erfolgen. Die Einzelsteuerung des zuzuschaltenden Speichermoduls kann dann die Symmetrieprüfung als bestanden bewerten, wenn für das zuzuschaltende Speichermodul in der gegengepolten Minuspol- oder Pluspol-Aufnahme ein weiteres in dem Wartemodus befindendes Speichermodul vorhanden ist. Bei der bestandenen Symmetrieprüfung, sobald die Einzelsteuerung des zuzuschaltenden Speichermoduls die Batterieeinheit des zuzuschaltenden Speichermoduls zu der Gesamtbatterie zuschaltet, kann die Einzelsteuerung des weiteren Speichermoduls die Batterieeinheit des weiteren Speichermoduls zu der Gesamtbatterie zuschalten. Mit anderen Worten prüft die Einzelsteuerung des zuzuschaltenden Speichermoduls, ob sich für das zuzuschaltende Speichermodul ein Zuschaltpartner in der gegengepolten Minuspol- oder Pluspol-Aufnahme vorhanden ist. Ist das der Fall, so werden beide in den gegengepolten Minuspol- und Pluspol-Aufnahme befindliche Speichermodule zugeschaltet. Ist das nicht der Fall, so wird gewartet, bis ein solcher Zuschaltpartner für das zuzuschaltende Speichermodul in der gegengepolten Minuspol- oder Pluspol-Aufnahme angeordnet wird bzw. sich findet. Mit anderen Worten können in dem Verfahren das Speichermodul in der Pluspol-Aufnahme und das Speichermodul in der Minuspol-Aufnahme gleichzeitig zugeschaltet werden, sodass die Anzahl der dem Pluspol zugeordneten Speichermodule und die Anzahl der dem Minuspol zugeordneten Speichermodule identisch ist.

Die Einzelsteuerung des zuzuschaltenden Speichermoduls kann vor der Zuschaltprüfung eine Funktionsprüfung der Batterieeinheit des zuzuschaltenden Speichermoduls durchführen. Bei der bestandenen Funktionsprüfung kann dann die Einzelsteuerung des zuzuschaltenden Speichermoduls zu der Zustandsprüfung übergehen und sonst nicht übergehen. Insbesondere kann die Einzelsteuerung des zuzuschaltenden Speichermoduls bei der nicht bestandenen Funktionsprüfung die Batterieeinheit des zuzuschaltenden Speichermoduls zu der Gesamtbatterie nicht zuschalten. Bei der Funktionsprüfung kann insbesondere geprüft werden, ob das Speichermodul insgesamt funktionsfähig ist.

Bei der Funktionsprüfung kann die Einzelsteuerung des wenigstens einen Speichermoduls prüfen, ob ein Isolationswiderstand und/oder eine Potenzialdifferenz und/oder eine Überspannung und/oder eine Unterspannung und/oder ein Überstrom und/oder eine Temperatur und/oder eine Zuschalthäufigkeit und/oder ein Alter der Batterieeinheit des zuzuschaltenden Speichermoduls jeweils einen vordefinierten Grenzwert überschreitet. Die Funktionsprüfung kann dabei als bestanden bewertet werden, wenn der Isolationswiderstand und/oder die Potenzialdifferenz und/oder die Überspannung und/oder die Unterspannung und/oder der Überstrom und/oder die Temperatur und/oder die Zuschalthäufigkeit und/oder der Alter der Batterieeinheit des zuzuschaltenden Speichermoduls jeweils den vordefinierten Grenzwert nicht überschreitet. Sonst kann die Funktionsprüfung als nicht bestanden bewertet werden.

Die Funktionsprüfung des zuzuschaltenden bzw. bereits zugeschalteten Speichermoduls kann auch in seinem Betrieb periodisch durchgeführt werden. Mit anderen Worten kann die Einzelsteuerung die Funktionsprüfung nach einer vordefinierten Betriebsdauer des Speichermoduls erneut durchführen. Falls die Funktionsprüfung des wenigstens einen Speichermoduls in seinem Betrieb nicht bestanden wird, kann die Einzelsteuerung dieses Speichermoduls die Batterieeinheit dieses Speichermoduls von der Gesamtbatterie abschalten. Dadurch kann die Funktion der Gesamtbatterie im Betrieb des Energiespeichers sichergestellt werden. Zusätzlich kann, falls ein Zuschaltschema des Energiespeichers eine Serienschaltung der Batterieeinheiten der Speichermodule in der Gesamtbatterie aufweist, die Einzelsteuerung des in der gegengepolten Minuspol- oder Pluspol-Aufnahme befindenden weiteren Speichermoduls die Batterieeinheit dieses Speichermoduls von der Gesamtbatterie abschalten. Ist die Batterieeinheit des funktionsfähigen weiteren Speichermoduls von der Gesamtbatterie abgeschaltet, so kann seine Einzelsteuerung eine Zuschaltprüfung und/oder eine Symmetrieprüfung durchführen und/oder das Speichermodul in den Wartemodus setzten.

Mit anderen Worten kann auch das Abschalten der Batterieeinheiten der Speichermodule von der Gesamtbatterie je nach dem Zuschaltschema des Energiespeichers erfolgen. Ist in dem Energiespeicher ein Zuschaltschema ohne eine Serienschaltung/Reihenschaltung bzw. ein Zuschaltschema ausschließlich mit einer Parallelschaltung der Speichermodule bzw. der Batterieeinheiten der Speichermodule vorgesehen, so können die Speichermodule bzw. der Batterieeinheiten der Speichermodule einzeln abgeschaltet werden. Ist in dem Energiespeicher ein Zuschaltschema mit einer Serienschaltung/Reihenschaltung der Speichermodule bzw. der Batterieeinheiten der Speichermodule vorgesehen, so können die Speichermodule bzw. die Batterieeinheiten der Speichermodule paarweise abgeschaltet werden. Dadurch kann auch nach dem Abschalten der die Funktionsprüfung nicht bestandenen Speichermodule die Symmetrie zwischen den dem Pluspol zugeordneten Speichermodulen und den dem Minuspol der Gesamtbatterie zugeordneten Speichermodulen beibehalten werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Verschaltungsschema eines erfindungsgemäßen Energiespeichers mit zwei zugeschalteten Speichermodulen;
- Fig. 2: ein erstes Zuschaltschema in dem erfindungsgemäßen Energiespeicher mit einem einzigen Speichermodul;
- Fig. 3: das erste Zuschaltschema in dem erfindungsgemäßen Energiespeicher mit mehreren Speichermodulen in Parallelschaltung;
- Fig. 4: ein zweites Zuschaltschema in dem erfindungsgemäßen Energiespeicher mit zwei Speichermodulen in Serienschaltung;
- Fig. 5: ein drittes Zuschaltschema in dem erfindungsgemäßen Energiespeicher mit mehreren Speichermodulen in kombinierter Serienund Parallelschaltung;
- Fig. 6: ein viertes Zuschaltschema in dem erfindungsgemäßen Energiespeicher mit zwei Speichermodulen in Serienschaltung mit Mittelabgriff;
- Fig. 7: ein fünftes Zuschaltschema in dem erfindungsgemäßen Energiespeicher mit mehreren Speichermodulen in kombinierter Serienund Parallelschaltung mit Mittelabgriff.

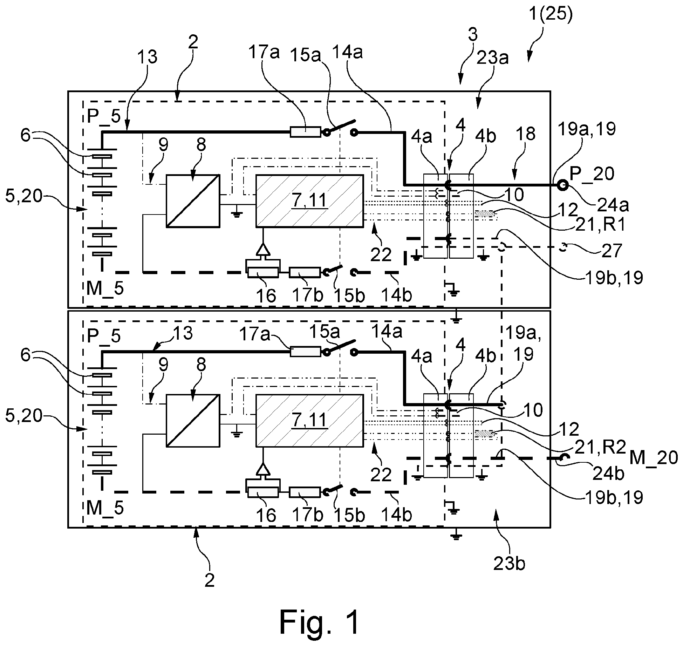

Fig. 1 zeigt ein Verschaltungsschema eines erfindungsgemäßen Energiespeichers 1 mit zwei zugeschalteten Speichermodulen 2. Die Speichermodule 2 sind zueinander identisch ausgebildet und sind in einem Trägergehäuse 3 angeordnet. Der Energiespeicher 1 umfasst dabei mehrere Verbinder 4, wobei ein erstes Verbinder-Stück 4a des Verbinders 4 in dem jeweiligen Speichermodul 2 und ein zweites Verbinder-Stück 4b des Verbinders 4 in dem Trägergehäuse 3 ausgebildet bzw. angeordnet sind. Über den Verbinder 4 sind dabei Komponenten des jeweiligen Speichermoduls 2 mit weiteren in dem Trägergehäuse 3 angeordneten Komponenten und mit weiteren in dem Trägergehäuse 3 angeordneten Speichermodulen 2 verschaltet oder verschaltbar.

Das Speichermodul 2 umfasst eine Batterieeinheit 5 mit mehreren Batteriezellen 6, eine Einzelsteuerung 7 und einen Gleichspannungswandler 8. Die Einzelsteuerung 7 ist in einem Versorgungsschaltkreis 9 des Speichermoduls 2 über den Gleichspannungswandler 8 mit der Batterieeinheit 5 verschaltet und mit dem von der Batterieeinheit 5 bereitgestellten Strom bestrombar. Das Trägergehäuse 3 umfasst dabei mehrere Leitungsstücke 10, von denen eins den Versorgungsschaltkreis 9 schließt. Dabei ist das jeweilige Leitungsstück 10 über den Verbinder 4 an den Versorgungsschaltkreis 9 verbunden. Ist das Speichermodul 2 aus dem Trägergehäuse 3 entnommen, so ist der Versorgungsschaltkreis 9 unterbrochen und die Einzelsteuerung 7 von dem von der Batterieeinheit 5 bereitgestellten Strom nicht bestrombar. Die Verbindung des Leitungsstücks 10 und des restlichen Versorgungsschaltkreises 9 erfolgt dabei über den Verbinder 4.

Die Einzelsteuerung 7 bildet dabei anteilig eine dezentrale Steuerungseinheit 11 des Energiespeichers 1 aus. Dazu kann die Einzelsteuerung 7 über eine Kommunikationsleitung 12 wie beispielweise CAN mit den Einzelsteuerungen 7 der weiteren Speichermodule 2 kommunizierend bzw. signalübertragen verbunden werden. Dabei ist die Einzelsteuerung 7 über den Verbinder 4 an die dezentrale Steuerungseinheit 11 anschließbar.

Das Speichermodul 2 umfasst ferner einen Leistungsschaltkreis 13 mit einer einem Pluspol P_5 der Batterieeinheit 5 zugeordneten Pluspol-Leitung 14a und einer einem Minuspol M_5 der Batterieeinheit 5 zugeordneten Minuspol-Leitung 14b. Dabei umfassen die Pluspol-Leitung 14a einen Plusplus-Schalter 15a und die Minuspol-Leitung 14b einen Minuspol-Schalter 15b. Der Pluspol-Schalter 15a und der Minuspol-Schalter 15b können von der Einzelsteuerung 7 geöffnet und geschlossen werden. Zudem sind der Pluspol-Schalter 15a und der Minuspol-Schalter 15b derart ausgebildet, dass bei der nicht bestromten Einzelsteuerung 7 diese geöffnet sind. Ist also das Speichermodul 2 aus dem Trägergehäuse 3 entnommen und der Versorgungsschaltkreis 9 unterbrochen, so sind auch der Pluspol-Schalter 15a und der Minuspol-Schalter 15b geöffnet.

In dem Leistungsschaltkreis 13 ist zudem in der Minuspol-Leitung 14b ein Shunt bzw. ein Messwiderstand 16 zum Erfassen von in dem Leistungsschaltkreis 13 fließenden Stroms mittels der Einzelsteuerung 7 angeschlossen. Ferner umfasst der Leistungsschaltkreis 13 eine in der Pluspol-Leitung 14a dem Pluspol-Schalter 15a stromauf angeschlossene Pluspol-Sicherung 17a und eine in der Minuspol-Leitung 14b dem Minuspol-Schalter 15b stromauf angeschlossene Minuspol-Sicherung 17b.

Hier bildet der Leistungsschaltkreis 13 zumindest anteilig einen Gesamtschaltkreis 18 des Energiespeichers 1 aus. Dazu ist der Leistungsschaltkreis 13 über den Verbinder 4 mit weiteren Verbindungselementen 19 des Gesamtschaltkreises 18 - hier Pluspol-Leiter 19a und Minuspol-Leiter 19b - verbunden. Die Verbindungselemente 19 sind in dem Trägergehäuse 3 angeordnet und verbinden die Leistungsschaltkreise 13 der Speichermodule 2 entsprechend einem Zuschaltschema miteinander. In dem Gesamtschaltkreis 18 des Energiespeichers 1 bildet dann die Batterieeinheit 5 des Speichermoduls 2 zumindest anteilig eine Gesamtbatterie 20 des Energiespeichers 1 aus.

Ferner umfassen das Trägergehäuse 3 mehrere Widerstandselemente 21 und das Speichermodul 2 einen Erkennungsschaltkreis 22, wobei in dem Erkennungsschaltkreis 22 die Einzelsteuerung 7 und eins der in dem Trägergehäuse 3 angeordnete Widerstandselement 21 angeschlossen sind. Dabei ist die Einzelsteuerung 7 mit dem jeweiligen Widerstandselement 21 über den Verbinder 4 verbunden. In dem Trägergehäuse 3 sind dabei wenigstens eine einem Pluspol P_20 der Gesamtbatterie 20 zugeordnete Pluspol-Aufnahme 23a und wenigstens eine einem Minuspol M_20 der Gesamtbatterie 20 zugeordnete Minuspol-Aufnahme 23b ausgebildet. Um die Pluspol-Aufnahme 23a und die Minuspol-Aufnahme 23b voneinander zu unterscheiden, weisen die der Pluspol-Aufnahme 23a zugeordneten Widerstandselemente 21 einen ersten elektrischen Widerstand R1 und die der Minuspol-Aufnahme 23b zugeordneten Widerstandselemente 21 einen zweiten elektrischen Widerstand R2 auf. Die Einzelsteuerung 7 des Speichermoduls 2 kann dann über den Erkennungsschaltkreis 22 den Widerstand R1 oder R2 des Widerstands 21 erfassen und die Zuordnung des Speichermoduls 2 dem Pluspol P_20 der Gesamtbatterie 20 oder dem Minuspol M_20 der Gesamtbatterie 20 erkennen bzw. bestimmen.

In dem hier gezeigten Energiespeicher 1 sind zwei Speichermodule 2 in dem Trägergehäuse 3 entnehmbar angeordnet. Dabei ist das eine Speichermodul 2 in der Pluspol-Aufnahme 23a und das andere Speichermodul 2 in der Minuspol-Aufnahme 23b aufgenommen. Die Einzelsteuerungen 7 der Speichermodule 2 sind über ihre Kommunikationsleitungen 12 kommunizierend bzw. signalübertragend miteinander verbunden und bilden die dezentrale Steuerungseinheit 11 des Energiespeichers 1 aus. Die dezentrale Steuerungseinheit 11 weist dabei keine weiteren externen Komponenten auf. Die Leistungsschaltkreise 13 der Speichermodule 2 bilden jeweils anteilig den Gesamtschaltkreis 18 des Energiespeichers 1 aus, in dem die Batterieeinheiten 5 der Speichermodule 2 anteilig die Gesamtbatterie 20 des Energiespeichers 1 ausbilden. Die Gesamtbatterie 20 kann dabei über einen Pluspol-Anschluss 24a und einen Minuspol-Anschluss 24b nach außen kontaktiert werden. Dabei sind der Pluspol-Anschluss 24a mit den Pluspol-Leitern 19a des Gesamtschaltkreises 18 und der Minuspol-Anschluss 24b mit den Minuspol-Leitern 19b des Gesamtschaltkreises 18 verschaltet bzw. durch diese ausgebildet.

Der Energiespeicher 1 kann in einem erfindungsgemäßen Verfahren 25 gesteuert bzw. betrieben werden. Das Verfahren 25 wird im Folgenden anhand Fig. 1 näher beschrieben. Dabei wird angenommen, dass in das leere Trägergehäuse 3 zuerst das Speichermodul 2 in die Pluspol-Aufnahme 23a und anschließend das Speichermodul 2 in die Minuspol-Aufnahme 23b angeordnet werden. Um die Speichermodule 2 voneinander zu unterscheiden, werden hier in Bezug auf die Speichermodule 2 die Bezeichnung "pluspoliges" und "minuspoliges" verwendet. Diese Bezeichnung stellt jedoch keine Unterschiede der Speichermodule 2 voneinander dar, sondern wird ausschließlich zur deren Unterscheidung in Bezug auf deren Anordnung in dem Trägergehäuse 3 voneinander verwendet.

Wird das pluspolige Speichermodul 2 in der Pluspol-Aufnahme 23a des leeren Trägergehäuses 3 angeordnet, so wird das erste Verbinder-Stück 4a des pluspoligen Speichermoduls 2 automatisch mit dem der Pluspol-Aufnahme 23a zugeordneten zweiten Verbinder-Stück 4b in dem Trägergehäuse 3 verbunden. Dabei wird die Pluspol-Leitung 14a des Leistungsschaltkreises 13 mit dem Pluspol-Leiter 19a des Gesamtschaltkreises 18 und die Minuspol-Leitung 14b des Leistungsschaltkreises 13 mit dem Minuspol-Leiter 19b des Gesamtschaltkreises 18 verbunden, sodass der Leistungsschaltkreis 13 des pluspoligen Speichermoduls 2 einen Teil des Gesamtschaltkreises 18 ausbildet. Ferner wird der Versorgungsschaltkreis 9 des pluspoligen Speichermoduls 2 mit dem Leitungsstück 10 in dem Trägergehäuse 3 geschlossen, wobei der Pluspol-Schalter 15a und der Minuspol-Schalter 15b geöffnet bleiben. Dabei schließt der Versorgungsschaltkreis 9 bevor der Leistungsschaltkreis 13 an den Gesamtschaltkreis 18 angeschlossen ist. Zudem wird der Erkennungsschaltkreis 22 des pluspoligen Speichermoduls 2 mit dem Widerstandselement 21 der Pluspol-Aufnahme 23a geschlossen. Die Einzelsteuerung 7 des pluspoligen Speichermoduls 2 wird zu der dezentralen Steuerungseinheit 11 zugeschaltet und bildet diese vollständig aus, da hier noch keine weiteren Speichermodule 2 zugeschaltet sind.

Danach führt die Einzelsteuerung 7 des pluspoligen Speichermoduls 2 eine Funktionsprüfung der Batterieeinheit 5 durch. Bei dieser können ein Isolationswiderstand und/oder eine Potenzialdifferenz und/oder eine Überspannung und/oder eine Unterspannung und/oder ein Überstrom und/oder eine Temperatur und/oder eine Zuschalthäufigkeit des Pluspol-Schalters 15a und/oder des Minuspol-Schalters 15b und/oder ein Alter der Batterieeinheit 5 geprüft werden. Sind die geprüften Parameter nicht in Ordnung, so gilt die Funktionsprüfung als nicht bestanden. Mit anderen Worten wird das Speichermodul 2 als nicht funktionsfähig eingestuft. Die Batterieeinheit 5 des pluspoligen Speichermoduls 2 wird zu der Gesamtbatterie 20 nicht zugeschaltet und der Pluspol-Schalter 15a und/oder der Minuspol-Schalter 15b bleiben geöffnet.

Ist die Funktionsprüfung bestanden, so wird danach eine Zuschaltprüfung des pluspoligen Speichermoduls 2 durchgeführt. Hier prüft die Einzelsteuerung 7 des pluspoligen Speichermoduls 2, ob eine Differenz zwischen einer in der Batterieeinheit 5 vorliegenden Spannung und einer in der Gesamtbatterie 20 vorliegenden Spannung in Ordnung ist. Durch die Zuschaltprüfung kann insbesondere die Gefahr eines unzulässig hohen Ausgleichsstroms in der Gesamtbatterie 20 ausgeschlossen werden. Überschreitet die Differenz einen vordefinierten Grenzwert, so wird die Zuschaltprüfung als nicht bestanden bewertet und die Batterieeinheit 5 wird zu der Gesamtbatterie 20 nicht zugeschalten bzw. der Pluspol-Schalter 15a und/oder der Minuspol-Schalter 15b bleiben geöffnet. Da hier das pluspolige Speichermodul 2 das einzige Speichermodul 2 ist, wird die Zuschaltprüfung als bestanden bewertet. Hier kann die Batterieeinheit 5 des pluspoligen Speichermoduls 2 zu der Gesamtbatterie 20 ohne Gefahr eines unzulässig hohen Ausgleichsstroms zugeschaltet werden.

In dem hier gezeigten Energiespeicher 1 sieht das Zuschaltschema eine Serienschaltung bzw. Reihenschaltung der Batterieeinheiten 5 der Speichermodule 2 vor. Deshalb führt die Einzelsteuerung 7 nach der bestandenen Zuschaltprüfung des pluspoligen Speichermoduls 2 eine Symmetrieprüfung durch. Dabei prüft die Einzelsteuerung 7 über den Erkennungsschaltkreis 22, ob das pluspolige Speichermodul 2 dem Minuspol M_20 oder dem Pluspol P_20 der Gesamtbatterie 20 zugeordnet ist. Hier ist das pluspolige Speichermodul 2 in der Pluspol-Aufnahme 23a angeordnet, was die Einzelsteuerung 7 des pluspoligen Speichermoduls 2 anhand des gemessenen Widerstands R1 erkennt. Nun prüft die Einzelsteuerung 7 des pluspoligen Speichermoduls 2, ob sich in einer der Minuspol-Aufnahmen 23b ein Zuschaltpartner für das pluspolige Speichermodul 2 befindet. Das ist hier nicht der Fall und die Einzelsteuerung 7 setzt das pluspolige Speichermodul 2 in den Wartemodus.

Wird das minuspolige Speichermodul 2 in der Minuspol-Aufnahme 23b des Trägergehäuses 3 angeordnet, so wird das erste Verbinder-Stück 4a des minuspoligen Speichermoduls 2 automatisch mit dem der Minuspol-Aufnahme 23b zugeordneten zweiten Verbinder-Stück 4b in dem Trägergehäuse 3 verbunden. Dadurch bildet der Leistungsschaltkreis 13 des minuspoligen Speichermoduls 2 einen Teil des Gesamtschaltkreises 18 aus und der Versorgungsschaltkreis 9 des minuspoligen Speichermoduls 2 wird mit dem Leitungsstück 10 geschlossen. Zudem wird der Erkennungsschaltkreis 22 des minuspoligen Speichermoduls 2 mit dem Widerstandselement 21 der Minuspol-Aufnahme 23b geschlossen. Die Einzelsteuerung 7 des minuspoligen Speichermoduls 2 wird zu der dezentralen Steuerungseinheit 11 zugeschaltet und über die Kommunikationsleitung 12 mit der Einzelsteuerung 7 des pluspoligen Speichermoduls 2 kommunizierend bzw. signalübertragend verbunden.

Danach führt die Einzelsteuerung 7 des minuspoligen Speichermoduls 2 die Funktionsprüfung und die Zuschaltprüfung des minuspoligen Speichermoduls 2 durch. Sind die Funktionsprüfung und die Zuschaltprüfung bestandet, so startet die Einzelsteuerung 7 die Symmetrieprüfung. Bei der Symmetrieprüfung prüft die Einzelsteuerung 7 des minuspoligen Speichermoduls 2 über den Erkennungsschaltkreis 22, ob das minuspolige Speichermodul 2 dem Minuspol M_20 oder dem Pluspol P_20 der Gesamtbatterie 20 zugeordnet ist. Hier ist das minuspolige Speichermodul 2 in der Minuspol-Aufnahme 23b angeordnet, was die Einzelsteuerung 7 des minuspoligen Speichermoduls 2 anhand des gemessenen Widerstands R2 erkennt. Nun prüft die Einzelsteuerung 7 des minuspoligen Speichermoduls 2, ob sich in einer der Pluspol-Aufnahmen 23a ein Zuschaltpartner für das minuspolige Speichermodul 2 befindet. In der Pluspol-Aufnahme 23a ist bereits das pluspolige Speichermodul 2 in dem Wartemodus vorhanden, das sich als Zuschaltpartner für das minuspolige Speichermodul 2 eignet. Nun schalten die Einzelsteuerung 7 des minuspoligen Speichermoduls 2 seine Batterieeinheit 5 und die Einzelsteuerung 7 des pluspoligen Speichermoduls 2 seine Batterieeinheit 5 zu der Gesamtbatterie 20 zu. Mit anderen Worten werden der Pluspol-Schalter 15a und/oder der Minuspol-Schalter 15b des pluspoligen Speichermoduls 2 und der Pluspol-Schalter 15a und/oder der Minuspol-Schalter 15b des minuspoligen Speichermoduls 2 geschlossen.

Wäre hier anstatt des minuspoligen Speichermoduls 2 ein weiteres Speichermodul in einer weiteren - hier nicht gezeigt - Pluspol-Aufnahme 23a angeordnet, so wäre seine Symmetrieprüfung als nicht bestanden bewertet. Insbesondere wäre in diesem Fall kein Zuschalten der Batterieeinheit 5 dieses Speichermoduls 2 zu der Gesamtbatterie 20 möglich, da hier zwei Speichermodule 2 dem Pluspol P_20 der Gesamtbatterie 20 und kein einziges Speichermodul 2 dem Minuspol M_20 der Gesamtbatterie 20 zugeordnet wären. Das weitere in der Pluspol-Aufnahme 23a angeordnete Speichermodul 2 wäre dann in den Wartemodus gesetzt, bis sich in der Minuspol-Aufnahme 23b ein Zuschaltpartner für ihn findet.

Im Betrieb des Energiespeichers 1 können die Einzelsteuerungen 7 die Funktionsprüfung der Speichermodule 2 periodisch durchführen. Wird diese bei einem der Speichermodule 2 nicht bestandet, so wird seine Batterieeinheit 5 von der Gesamtbatterie 20 abgeschaltet. Die Batterieeinheit 5 seines Zuschaltpartners wird auf gleiche Weise von der Gesamtbatterie 20 abgeschaltet. Die Einzelsteuerung 7 des funktionsfähigen abgeschalteten Speichermoduls 2 kann danach eine Symmetrieprüfung durchführen und - falls möglich - die Batterieeinheit 5 dieses Speichermoduls 2 zu der Gesamtbatterie 20 zusammen mit einem anderen funktionsfähigen Speichermodul 2 zuschalten.

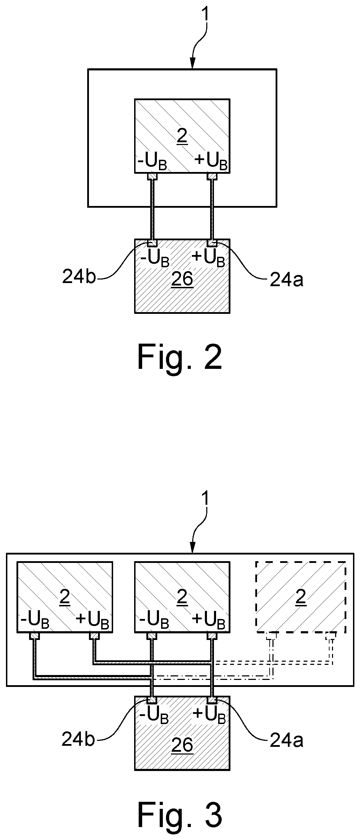

Fig. 2 zeigt ein erstes Zuschaltschema in dem erfindungsgemäßen Energiespeicher 1. Hier umfasst der Energiespeicher 1 das einzige Speichermodul 2, dessen Batterieeinheit 5 die Gesamtbatterie 20 des Energiespeichers 1 ausbildet. Über den Pluspol-Anschluss 24a und den Minuspol-Anschluss 24b ist der Energiespeicher 1 mit einer externen Einheit 26 zum Versorgen dieser mit Strom verbunden. Die Einheit 26 ist dabei kein Teil des erfindungsgemäßen Energiespeichers 1.

Fig. 3 zeigt das erste Zuschaltschema in dem erfindungsgemäßen Energiespeicher 1. In Fig. 3 sind zwei Speichermodule 2 parallel bzw. in einer Parallelschaltung zueinander geschaltet. Zudem ist hier ein weiteres Speichermodul 2 mit durchbrochenen Linien dargestellt, das zu den zwei bereits zugeschalteten Speichermodulen 2 zugeschaltet werden kann. In dem hier gezeigten ersten Zuschaltschema des Energiespeichers 1 ist keine Serienschaltung bzw. Reihenschaltung der Speichermodule 2 vorgesehen. Beim Zuschalten der Speichermodule 2 ist demnach kein Zuschaltpartner notwendig, sodass hier im Verfahren 25 nach der bestandenen Funktionsprüfung und der bestandenen Zuschaltprüfung das jeweilige Speichermodul 2 ohne die Symmetrieprüfung zu der Gesamtbatterie 20 zugeschaltet werden kann. Zudem sind hier in dem Trägergehäuse 3 des Energiespeichers 1 keine Pluspol-Aufnahmen 23a und keine Minuspol-Aufnahmen 23b vorgesehen.

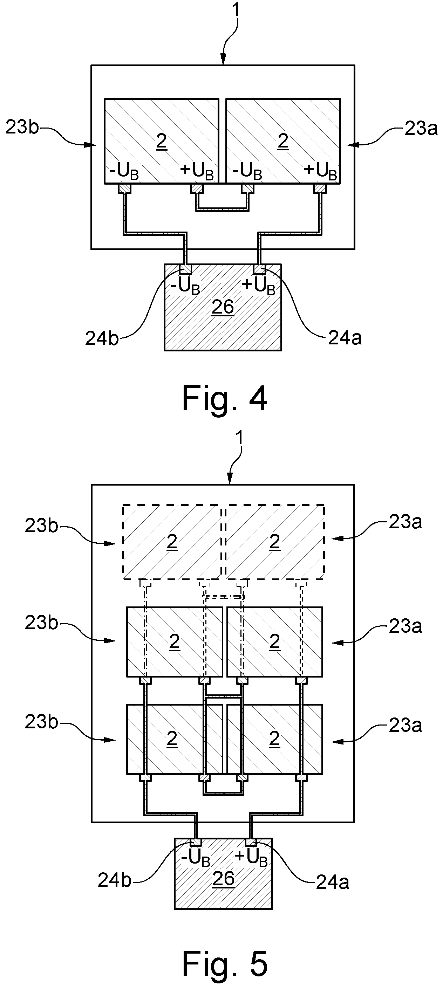

Fig. 4 zeigt ein zweites Zuschaltschema in dem erfindungsgemäßen Energiespeicher 1. Hier sind zwei Speichermodule 2 seriell bzw. in einer Serienschaltung bzw. Reihenschaltung zueinander geschaltet. In dem hier gezeigten zweiten Zuschaltschema sind die Speichermodule 2 nur paarweise zuschaltbar, sodass hier im Verfahren 25 beim Zuschalten der Speichermodule 2 nach der bestandenen Funktionsprüfung und der bestandenen Zuschaltprüfung stets die Symmetrieprüfung wie oben bereits beschrieben erfolgt.

Fig. 5 zeigt ein drittes Zuschaltschema in dem erfindungsgemäßen Energiespeicher 1. In Fig. 4 sind vier Speichermodule 2 in einer kombinierten Serien- und Parallelschaltung zueinander geschaltet. Zudem sind hier zwei weitere Speichermodule 2 mit durchbrochenen Linien dargestellt, die zu den anderen bereits zugeschalteten Speichermodulen 2 zugeschaltet werden können. In dem hier gezeigten dritten Zuschaltschema sind die Speichermodule 2 nur paarweise zuschaltbar, sodass hier im Verfahren 25 beim Zuschalten der Speichermodule 2 nach der bestandenen Funktionsprüfung und der bestandenen Zuschaltprüfung stets die Symmetrieprüfung wie oben bereits beschrieben erfolgt.

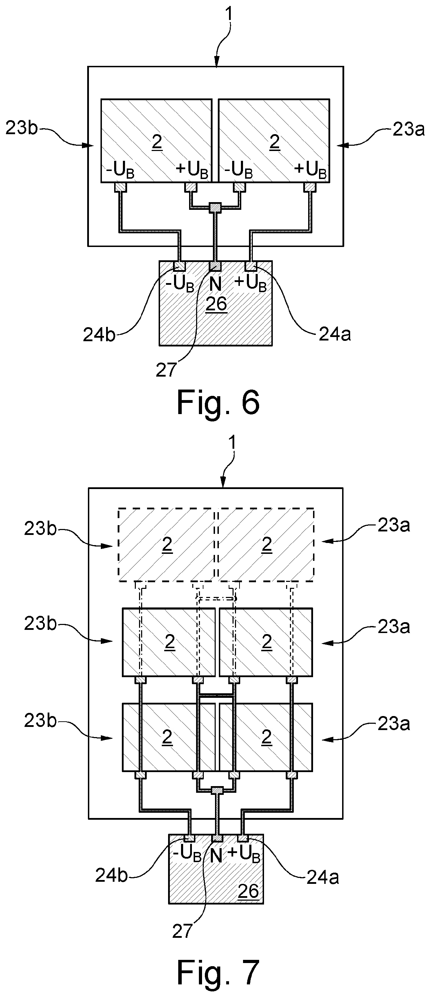

Fig. 6 zeigt ein viertes Zuschaltschema in dem erfindungsgemäßen Energiespeicher 1. Hier sind zwei Speichermodule 2 in einer Serienschaltung bzw. Reihenschaltung mit Mittelabgriff zueinander geschaltet. Im Unterschied zu den bereits gezeigten Zuschaltschemas ist hier zusätzlich ein Neutralanschluss 27 vorgesehen. Der in Fig. 1 gezeigte Energiespeicher 1 weist das hier gezeigte vierte Zuschaltschema auf. In dem hier gezeigten vierten Zuschaltschema sind die Speichermodule 2 nur paarweise zuschaltbar, sodass hier im Verfahren 25 beim Zuschalten der Speichermodule 2 nach der bestandenen Funktionsprüfung und der bestandenen Zuschaltprüfung stets die Symmetrieprüfung wie oben bereits beschrieben erfolgt.

Fig. 7 zeigt ein fünftes Zuschaltschema in dem erfindungsgemäßen Energiespeicher 1. Hier sind vier Speichermodule 2 mit dem gemeinsamen Neutralanschluss 27 in einer kombinierten Serien- und Parallelschaltung mit Mittelabgriff zueinander geschaltet. Zudem sind hier zwei weitere Speichermodule 2 mit durchbrochenen Linien dargestellt, die zu den anderen bereits zugeschalteten Speichermodulen 2 zugeschaltet werden können. In dem hier gezeigten fünften Zuschaltschema sind die Speichermodule 2 nur paarweise zuschaltbar, sodass hier im Verfahren 25 beim Zuschalten der Speichermodule 2 nach der bestandenen Funktionsprüfung und der bestandenen Zuschaltprüfung stets die Symmetrieprüfung wie oben bereits beschrieben erfolgt.

## Patentansprüche

1. Energiespeicher (1), insbesondere für eine unterbrechungsfreie Stromversorgung,
- wobei der Energiespeicher (1) wenigstens ein Speichermodul (2) und ein Trägergehäuse (3) zum Aufnehmen mehrerer solcher Speichermodule (2) aufweist,
- wobei das wenigstens eine Speichermodul (2) eine Batterieeinheit (5) mit mehreren Batteriezellen (6) zum Bereitstellen einer Gleichspannung und eine Einzelsteuerung (7) zum Steuern des wenigstens einen Speichermoduls (2) aufweist,
- wobei das wenigstens eine Speichermodul (2) in dem Trägergehäuse (3) entnehmbar angeordnet ist, und
- wobei der Energiespeicher (1) eine aus einer oder mehreren Batterieeinheiten (5) zusammensetzbare Gesamtbatterie (20) aufweist und die Batterieeinheit (5) des wenigstens einen Speichermodus (2) zumindest anteilig die Gesamtbatterie (20) des Energiespeichers (2) ausbildet,
**dadurch gekennzeichnet,**
**dass** der Energiespeicher (1) eine, insbesondere ausschließlich, aus einer oder mehreren Einzelsteuerungen (7) zusammensetzbare dezentrale Steuerungseinheit (7) aufweist und die Einzelsteuerung (7) des wenigstens einen Speichermoduls (2) zumindest anteilig die dezentrale Steuerungseinheit (11) des Energiespeichers (1) ausbildet.

2. Energiespeicher (1) nach Anspruch 1,
**dadurch gekennzeichnet,**
- **dass** das wenigstens eine Speichermodul (2) einen Leistungsschaltkreis (13) und der Energiespeicher (1) einen Gesamtschaltkreis (18) aufweist,
- **dass** in dem Leistungsschaltkreis (13) des wenigstens einen Speichermoduls (2) die Batterieeinheit (5) des wenigstens einen Speichermoduls (2) und in dem Gesamtschaltkreis (18) des Energiespeichers (1) die Gesamtbatterie (20) angeschlossen ist,
- **dass** der Leistungsschaltkreis (13) des wenigstens einen Speichermoduls (2) derart ausgebildet ist, dass bei dem in dem Trägergehäuse (3) angeordneten Speichermodul (2) sein Leistungsschaltkreis (13) zumindest anteilig den Gesamtschaltkreis (18) des Energiespeichers (1) ausbildet, und
- **dass** der Leistungsschaltkreis (13) des wenigstens einen Speichermoduls (2) derart ausgebildet ist, dass bei dem geschlossenen Leistungsschaltkreis (13) die Batterieeinheit (5) des wenigstens einen Speichermoduls (2) zumindest anteilig die Gesamtbatterie (20) des Energiespeichers (1) ausbildet.

3. Energiespeicher (1) nach Anspruch 1 oder 2,
**dadurch gekennzeichnet,**
- **dass** das wenigstens eine Speichermodul (2) einen Versorgungsschaltkreis (9) und das Trägergehäuse (3) wenigstens ein Leitungsstück (10) aufweist,
- **dass** in dem Versorgungsschaltkreis (9) des wenigstens einen Speichermoduls (2) die Batterieeinheit (5) des wenigstens einen Speichermoduls (2) und die Einzelsteuerung (7) des wenigstens einen Speichermoduls (2) angeschlossen sind,
- **dass** der Versorgungsschaltkreis (9) des wenigstens einen Speichermoduls (2) derart ausgebildet ist, dass bei dem in dem Trägergehäuse (3) angeordneten Speichermodul (2) sein Versorgungsschaltkreis (9) über das Leitungsstück (10) des Trägergehäuses (3) geschlossen ist, und
- **dass** der Versorgungsschaltkreis (9) des wenigstens einen Speichermoduls (2) derart ausgebildet ist, dass bei dem geschlossenen Versorgungsschaltkreis (9) die Einzelsteuerung (7) des wenigstens einen Speichermoduls (2) von der Batterieeinheit (5) des wenigstens einen Speichermoduls (2) bestrombar ist.

4. Energiespeicher (1) nach Anspruch 3,
**dadurch gekennzeichnet,**
- **dass** bei dem wenigstens einen Speichermodul (2) der Leistungsschaltkreis (13) eine einem Pluspol (P_5) der Batterieeinheit (5) zugeordnete Pluspol-Leitung (14a) mit einem Pluspol-Schalter (15a) und eine einem Minuspol (M_5) der Batterieeinheit (5) zugeordnete Minuspol-Leitung (14b) mit einem Minuspol-Schalter (15b) aufweist, und
- **dass** der Pluspol-Schalter (15a) und der Minuspol-Schalter (15b) derart ausgebildet sind, dass sie bei dem geöffneten Versorgungsschaltkreis (9) geöffnet sind und bei dem geschlossenen Versorgungsschaltkreis (9) mittels der Einzelsteuerung (7) des wenigstens einen Speichermoduls (2) schließbar und öffenbar sind.

5. Energiespeicher (1) zumindest nach Anspruch 2 und 3,
**dadurch gekennzeichnet,**
- **dass** der Leistungsschaltkreis (13) und der Versorgungsschaltkreis (9) derart ausgebildet sind, dass beim Anordnen des wenigstens einen Speichermoduls (2) in dem Trägergehäuse (3) der Versorgungsschaltkreis (9) des wenigstens einen Speichermoduls (2) über das Leitungsstück (10) geschlossen ist, bevor sein Leistungsschaltkreis (13) an den Gesamtschaltkreis (18) des Energiespeichers (1) angeschlossen ist, und
- **dass** der Leistungsschaltkreis (13) und der Versorgungsschaltkreis (9) derart ausgebildet sind, dass beim Entnehmen des wenigstens einen Speichermoduls (2) aus dem Trägergehäuse (3) sein Versorgungsschaltkreis (9) über das Leitungsstück (10) geöffnet ist, bevor sein Leistungsschaltkreis (13) von dem Gesamtschaltkreis (18) des Energiespeichers (1) getrennt ist.

6. Energiespeicher (1) nach einem der vorangehenden Ansprüche,
**dadurch gekennzeichnet,**
- **dass** das Trägergehäuse (3) wenigstens eine einem Pluspol (P_20) der Gesamtbatterie (20) zugeordnete Pluspol-Aufnahme (23a) und wenigstens eine einem Minuspol (M_20) der Gesamtbatterie (20) zugeordnete Minuspol-Aufnahme (23b) aufweist, und
- **dass** das in der Pluspol-Aufnahme (23a) angeordnete wenigstens eine Speichermodul (2) dem Pluspol (P_20) der Gesamtbatterie (20) und das in der Minuspol-Aufnahme (23b) angeordnete wenigstens eine Speichermodul (2) dem Minuspol (M_20) der Gesamtbatterie (20) zugeordnet ist.

7. Energiespeicher (1) nach Anspruch 6,
**dadurch gekennzeichnet,**
- **dass** das Trägergehäuse (3) für jede Pluspol-Aufnahme (23a) jeweils ein Widerstandselement (21) mit einem ersten elektrischen Widerstand (R1) und für jede Minuspol-Aufnahme (23b) jeweils ein Widerstandselement (21) mit einem von dem ersten Widerstand (R1) abweichenden zweiten elektrischen Widerstand (R2) aufweist,
- **dass** das wenigstens eine Speichermodul (2) einen Erkennungsschaltkreis (22) aufweist,
- **dass** der Erkennungsschaltkreis (22) des wenigstens einen Speichermoduls (2) derart ausgebildet ist, dass bei dem in dem Trägergehäuse (3) angeordneten Speichermodul (2) sein Erkennungsschaltkreis (22) über das Widerstandselement (21) des Trägergehäuses (3) geschlossen ist, und
- **dass** der Erkennungsschaltkreis (22) des wenigstens einen Speichermoduls (2) derart ausgebildet ist, dass bei dem geschlossenen Erkennungsschaltkreis (22) die Zuordnung des wenigstens einen Speichermoduls (2) dem Minuspol (M_20) der Gesamtbatterie (20) oder dem Pluspol (P_20) der Gesamtbatterie (20) anhand einer Widerstandsmessung des Widerstandelements (21) von der Einzelsteuerung (7) des wenigstens einen Speichermoduls (2) erkennbar ist.

8. Energiespeicher (1) nach einem der vorangehenden Ansprüche,
**dadurch gekennzeichnet,**
- **dass** der Energiespeicher (1) wenigstens einen Verbinder (4) mit einem in dem wenigstens einen Speichermodul (2) angeordneten ersten Verbinder-Stück (4a) und einem in dem Trägergehäuse (3) angeordneten zweiten Verbinder-Stück (4b) aufweist, und
- **dass** das wenigstens eine Speichermodul (2) bei den miteinander verbundenen Verbinder-Stücken (4a, 4b) mit Komponenten des Trägergehäuses (3) verschaltet und bei den miteinander nicht verbundenen Verbinder-Stücken (4a, 4b) mit Komponenten des Trägergehäuses (3) nicht verschaltet ist.

9. Verfahren (25) zum Betreiben des Energiespeichers (1) nach einem der vorangehenden Ansprüche,
- wobei ein zuzuschaltendes Speichermodul (2) des Energiespeichers (1) in dem Trägergehäuse (3) des Energiespeichers (1) angeordnet wird,
- wobei die Einzelsteuerung (7) des zuzuschaltenden Speichermoduls (2) zu der dezentralen Steuerungseinheit (11) des Energiespeichers (1) zugeschaltet wird und diese zumindest anteilig ausbildet,
- wobei die Einzelsteuerung (7) des zuzuschaltenden Speichermoduls (2) eine Zuschaltprüfung der Batterieeinheit (5) des zuzuschaltenden Speichermoduls (2) durchführt,
- wobei bei der Zuschaltprüfung die Einzelsteuerung (7) des zuzuschaltenden Speichermoduls (2) prüft, ob eine Differenz zwischen einer Spannung der Batterieeinheit (5) des zuzuschaltenden Speichermoduls (2) und einer Gesamtspannung der Gesamtbatterie (20) einen vordefinierten Grenzwert überschreitet,
- wobei die Einzelsteuerung (7) des zuzuschaltenden Speichermoduls (2) die Zuschaltprüfung als bestanden bewertet, wenn die Differenz den vordefinierten Grenzwert nicht überschreitet, und sonst als nicht bestanden bewertet, und
- wobei bei der nicht bestandenen Zuschaltprüfung die Einzelsteuerung (7) des zuzuschaltenden Speichermoduls (2) die Batterieeinheit (5) des zuzuschaltenden Speichermoduls (2) zu der Gesamtbatterie (20) des Energiespeichers (1) nicht zuschaltet.

10. Verfahren (25) nach Anspruch 9,
**dadurch gekennzeichnet,**
- **dass** die Einzelsteuerung (7) des zuzuschaltenden Speichermoduls (2) nach der bestandenen Zuschaltprüfung die Batterieeinheit (5) des zuzuschaltenden Speichermoduls (2) zu der Gesamtbatterie (20) des Energiespeichers (1) zuschaltet, und/oder
- **dass** die Einzelsteuerung (7) des zuzuschaltenden Speichermoduls (2) nach der bestandenen Zuschaltprüfung eine Symmetrieprüfung durchführt und die Batterieeinheit (5) des zuzuschaltenden Speichermoduls (2) zu der Gesamtbatterie (20) des Energiespeichers (1) bei der bestandenen Symmetrieprüfung zuschaltet und sonst in einen Wartemodus setzt.

11. Verfahren (25) nach Anspruch 10,
**dadurch gekennzeichnet,**
**dass** die Einzelsteuerung (7) des zuzuschaltenden Speichermoduls (2) nach der bestandenen Zuschaltprüfung die Symmetrieprüfung durchführt, wenn ein Zuschaltschema des Energiespeichers (1) eine Serienschaltung der Batterieeinheiten (5) der Speichermodule (2) in der Gesamtbatterie (20) aufweist.

12. Verfahren (25) nach Anspruch 10 oder 11,
**dadurch gekennzeichnet,**
- **dass** bei der Symmetrieprüfung die Einzelsteuerung (7) des zuzuschaltenden Speichermoduls (2) prüft, ob das zuzuschaltende Speichermodul (2) sich in einer einem Pluspol (P_20) der Gesamtbatterie (20) zugeordneten Pluspol-Aufnahme (23a) oder in einer einem Minuspol (M_20) der Gesamtbatterie (20) zugeordneten Minuspol-Aufnahme (23b) des Trägergehäuses (3) befindet,
- **dass** die Einzelsteuerung (7) des zuzuschaltenden Speichermoduls (2) die Symmetrieprüfung als bestanden bewertet, wenn für das zuzuschaltende Speichermodul (2) in der gegengepolten Minuspol- oder Pluspol-Aufnahme (23a/23b) ein weiteres in dem Wartemodus befindendes Speichermodul (2) vorhanden ist, und
- **dass** bei der bestandenen Symmetrieprüfung, sobald die Einzelsteuerung (7) des zuzuschaltenden Speichermoduls (2) die Batterieeinheit (5) des zuzuschaltenden Speichermoduls (2) zu der Gesamtbatterie (20) zuschaltet, die Einzelsteuerung (7) des sich in dem Wartemodus befindenden weiteren Speichermoduls (2) die Batterieeinheit (5) des sich in dem Wartemodus befindenden weiteren Speichermoduls (2) zu der Gesamtbatterie (20) zuschaltet.

13. Verfahren (25) nach einem der Ansprüche 9 bis 12,
**dadurch gekennzeichnet,**
- **dass** die Einzelsteuerung (7) des zuzuschaltenden Speichermoduls (2) vor der Zuschaltprüfung eine Funktionsprüfung der Batterieeinheit (5) des zuzuschaltenden Speichermoduls (2) durchführt, und
- **dass** bei der bestandenen Funktionsprüfung die Einzelsteuerung (7) des zuzuschaltenden Speichermoduls (2) zu der Zustandsprüfung übergeht und sonst nicht übergeht.

14. Verfahren (25) nach Anspruch 13,
**dadurch gekennzeichnet,**
- **dass** bei der Funktionsprüfung die Einzelsteuerung (7) des zuzuschaltenden Speichermoduls (2) prüft, ob ein Isolationswiderstand und/oder eine Potenzialdifferenz und/oder eine Überspannung und/oder eine Unterspannung und/oder ein Überstrom und/oder eine Temperatur und/oder eine Zuschalthäufigkeit und/oder ein Alter der Batterieeinheit (5) des zuzuschaltenden Speichermoduls (2) jeweils einen vordefinierten Grenzwert überschreitet, und
- **dass** die Funktionsprüfung als bestanden bewertet wird, wenn der Isolationswiderstand und/oder die Potenzialdifferenz und/oder die Überspannung und/oder die Unterspannung und/oder der Überstrom und/oder die Temperatur und/oder die Zuschalthäufigkeit und/oder der Alter der Batterieeinheit (5) des zuzuschaltenden Speichermoduls (2) jeweils den vordefinierten Grenzwert nicht überschreitet, und sonst als nicht bestanden bewertet wird.

15. Verfahren (25) nach Anspruch 13 oder 14,
**dadurch gekennzeichnet,**
- **dass** die Funktionsprüfung des wenigstens einen Speichermoduls (2) in seinem Betrieb periodisch durchgeführt wird, wobei bei der nicht bestandenen Funktionsprüfung die Einzelsteuerung (7) des wenigstens einen Speichermoduls (2) die Batterieeinheit (5) des wenigstens einen Speichermoduls (2) von der Gesamtbatterie (20) abschaltet, und/oder
- **dass** die Funktionsprüfung des wenigstens einen Speichermoduls (2) in seinem Betrieb periodisch durchgeführt wird, wobei bei der nicht bestandenen Funktionsprüfung die Einzelsteuerung (7) des wenigstens einen Speichermoduls (2) die Batterieeinheit (5) dieses Speichermoduls (2) von der Gesamtbatterie (20) und die Einzelsteuerung (7) des in der gegengepolten Minuspol- oder Pluspol-Aufnahme (23a/23b) befindenden weiteren Speichermoduls (2) die Batterieeinheit (5) dieses Speichermoduls (2) von der Gesamtbatterie (20) abschaltet.
